# EUROPÄISCHE PATENTSCHRIFT

(11) **EP 2 004 428 B1**
(45) Veröffentlichungstag und Bekanntmachung des Hinweises auf die Patenterteilung: **21.09.2011**
(21) Anmeldenummer: 07724205.5
(22) Anmeldetag: 12.04.2007
(51) Int. Cl.: B60G 17/052, F16K 1/32, F16K 31/06

(54) **SCHALTVENTIL**
ON-OFF VALVE
SOUPAPE DE COMMANDE

(30) Priorität: 12.04.2006 DE 102006017276
(43) Veröffentlichungstag der Anmeldung: 24.12.2008
(73) Patentinhaber: Gudzulic, Miro, 83512 Wasserburg (DE)
(72) Erfinder: Gudzulic, Miro, 83512 Wasserburg (DE)
(74) Vertreter: Schwarz, Michael Stefan
(86) Internationale Anmeldenummer: PCT/EP2007/003264
(87) Internationale Veröffentlichungsnummer: WO 2007/118674

(56) Entgegenhaltungen:
- EP-A- 1 643 174
- EP-A1- 1 236 940
- WO-A-00/08340
- DE-A1- 1 600 913
- DE-A1- 4 327 764
- DE-A1- 10 017 030
- DE-C1- 10 025 749
- FR-A- 1 435 069
- FR-A1- 2 862 738
- GB-A- 2 198 814
- US-A- 3 949 964
- US-A- 4 662 604
- US-A- 5 007 458
- US-A- 5 020 771
- US-B1- 6 374 814

## Beschreibung

Die Erfindung betrifft ein druckentlastetes Schaltventil.

Elektromagnetisch betätigte druckentlastete Schaltventile werden insbesondere in Verbindung mit Luftfederungsanlagen in Kraft- und Schienenfahrzeugen sowie allgemein bei der Steuerung von Luftfedern im Industriebereich eingesetzt.

Ventile dieser Art sind z. B. aus DE 198 36 865 C1, EP 0 380 754 B1, DE 9203413 U1, DE 200 12 614 U1, DE 44 16 279 A1, DE 33 45 928 A1 und DE 198 52 349 A1 bekannt. Die in den genannten Schriften beschriebenen Ventile weisen jeweils ein Gehäuse auf, an welchem mindestens zwei Anschlüsse für eine im Gehäuse ortsfeste Spule, einen ortsfesten Kern, einen zu der Spule bewegbar geführten Anker und einen Ventilkörper auf, der einen Ventilsitz im Gehäuse aufweist. EP 1 643 174 A, als nächstliegender Stand der Technik angesehen, offenbart einen druckentlasteten Schaltventil mit einer ortsfeste Magnetspule und einem längsbeweglichen Anker, welcher mit dem länsbeweglichen Ventilkolben des Abschnitts Preumalikventil zusammenanbeilet, jedoch keine feste Verbindung mit diesen aufweist.

Es ist bekannt, die Baugruppe aus Ventilkörper und Anker druckentlastet auszubilden, d.h. zwei entgegenwirkende Wirkflächen gleicher Größe vorzusehen, die über einen Verbindungskanal kommunizieren und unter dem gleichen Druck stehen. Zu diesem Zweck ist der Anker mit einem Dichtungselement versehen, dessen Durchmesser seines Dichtungssitzes dem Durchmesser des Dichtsitzes des Ventilkörpers entspricht. Der Nachteil der bekannten Ventile besteht darin, dass für jede Sitzgröße ein eigenes Ventil erforderlich ist. D. h. für jede Nennweite müssen für den speziellen Ventilsitz ausgelegte Bauteile wie Magnetspule, Anker und Ventilkörper gefertigt werden. Hierduch entstehen enprme Kosten, da für sämtliche teile eigenen Werkzeuge erforderlich sind. Ein weiterer Nachteil der bekannten Ventile besteht darin, dass sie aufgrund des konstruktiven Aufbaus nur kurze Ankerhübe haben und dadurch auch nur kleine Querschnitte haben bzw. geringe Durchflussmengen ermöglichen können. Mit den bekannten Magntespulen ist eine Durchflussregelung auch nicht möglich. Darüber hinaus sind die bekannten Ventile kompliziert, in einem breiteren Nennweitenbereich nicht preiswert herstellbar und nicht wartungsfreundlich.

Neben der Funktion, den Luftstrom zwischen Druckluftquelle und Druckluftverbraucher zu regeln, wird bei einer Druckluftfederungsanlage beispielsweise noch eine zweite Funktion, nämlich eine gezielte Durchflussmengenregelung zwischen den beiden Endstellungen "Fahrzeug angehoben" und "Fahrzeug abgesenkt" gefordert. Eine derartige Vorrichtung ist aus der DE 42 43 577 bekannt. Um eine Luftfeder in der genannten Weise zu steuern und zu regeln wird zwischen einem 3/2-Wegeventil, welches an dem Druckluftspeicher angeschlossen ist und eiem 2/2-Wegeventil, welches die Druckluft von und zu der Luftfeder freigibt oder sperrt, ein zusätzliches 2/2-Wegeventil eingesetzt. In der ersten Position hat das Ventil freien Durchgang, und in der zweiten Position wirkt die Drossel. Abhängig von von einem Steuervorrichtung ausgehenden Steuersignalen wird das Ventil ein- oder ausgeschaltet. Der Nachteil dieser Lösung besteht darin, dass ein Zusatzventil erforderlich ist. Dies führt zur Steigerung der Kosten und des Energieverbrauchs. Das Zusatzventil hat in der zweiten Stellung immer den gleichen Querschnitt, d.h. die Funktion einer festen Drossel.

Aus der DE 199 35 428 C1 ist eine Betätigungseinrichtung für eine elektromagnetische Ventilsteuerung bekannt. Es handelt sich hier um eine Sonderkonstruktion mit zwei Elektromagneten, welche durch zwei Distanzstücke aus nicht ferromagnetischem Material voneinander getrennt angeordnet sind. Zwischen den Elektromagneten oszilliert eine Ankerplatte, an der ein Ventilstößel befestigt ist, welcher die einwirkenden Kräfte auf die Ankerplatte und uaf das Ventil überträgt. Auf der Gegenseite der Ankerplatte liegt ein Federstößel an, der über ein Ende die Federkräfte auf die Ankerplatte überträgt. Am anderen Ende des Federstößels ist ein Permanentmagnet angeordnet, welcher mit einem Hallsensor den Hub des Federstößels als Analogsignal proportional zum Ventilhub misst. Es handelt sich hier um eine Betätigungseinrichtung (Aktor) mit.zwei Elektromagneten, eine Sonderausführung des Hallsensors. Dadurch, dass beide Federn in dem Aktor und dem Ventil einstellbar sind werden zwangläufig wesentlich größere Elektromagnete als üblich benötigt. Es werden mehrere Bauteile benötigt, um den Aktor zu fertigen. Gleichzeitig ist der Wegsensor von dem eigentlichen Aktor nicht getrennt, wodurch Fluid in den Wegsensor gelangen kann. Es herrschen sehr enge Fertigungstoleranzen.

Es ist eine Aufgabe der Erfindung, ein Magnetventil der eingangs beschriebenen Art vorzuschlagen, dessen mechanischer Teil von dem elektrische Teil getrennt ist, wobei bei gleicher Magnetgröße verschieden große Ventilquerschnitte zur Verfügung gestellt, bzw. verschiedene Druckluftdurchflussmengen erreicht werden können.

Die Aufgabe wird gelöst mit einem druckentlasteten Schaltventil gemäß Anspruch 1. Vorteilhafte weiterbildungen der Erfindung geben die Unteransprüche an.

Bei der erfindungsgemäßen Konstruktion des Ventils ist vorteilhafterweise der Ventilkolben mit einer "raumtrennenden" Dichtung versehen. Damit sind zwei Anschlussräume (zur Druckluftquelle bzw. an die Umgebung und zum Verbraucher) voneinander dadurch abgeteilt, dass der Durchmesser des dem Ventilkörper zugeordneten Ventilsitzes, der Durchmesser der Dichtung des Ventilkolbens und der Durchmesser des Ventilkolbens gleich sind. Die Anschlussräume, die auf der einen Seite mit der Druckluftquelle bzw. der Umgebung und auf der anderen Seite mit dem Verbraucher verbunden sind, sind mittels der Dichtung des Ventilkolbens voneinander getrennt. Die Erfindung geht von dem Gedanken aus, einen druckentlasteten Ventilkörper so auszubilden, dass sein Ventilkolben nur über eine vergleichsweise kleine Betätigungskraft (nur Reibungskraft der Dichtung und Rückstellfeder müssen überwinden werden) verschoben werden kann. Der Durchmesser des Ventilsitzes und des nicht mit ihm fest gekoppelten Ventilkolbens werden gleich groß gewählt. Druckentlastung wird durch einen Verbindungskanal im Ventilkolben zur Verbindung des "hinter" dem Ventilkolben liegenden Raumes mit dem Ventilausgang (zum Verbraucher) erreicht. Durch die bisher nicht für möglich gehaltene erfinderische Maßnahme, den mechanischen Teil des Ventils von dem elektrischen Teil des Ventils zu trennen, wurde ein druckentlastetes Ventil mit beliebigem Ventilsitz und beliebiger Ventilquerschnittsgröße, aber mit immer gleich großer Betätigungskraft gefunden. Die Betätigungskraft wird von dem Magnetanker eines Kurzhubmagneten erzeugt. Bei Verwendung eines Kurzhubmagneten erreicht man dennoch problemlos relativ längere Ankerhübe. Hiermit lässt sich in Verbindung mit einem Hubsensor ein Proportionaleffekt erreichen.

Es ist besonders vorteilhaft, den Ventilkolben einstückig mit aufvulkanisierter Dichtung und Dämpfungseinrichtung auszuführen, um, Geräusche bei der Ventilöffnung zu reduzieren. Durch die Größe des Spalts zwischen der Dämpfungseinrichtung des Ventilkolbens und der Ringfläche des Ventildeckels wird der maximale Ventilhub bzw. die maximale Ventilöffnung bestimmt. Um den maximalen Ventildurchfluss zu verändern ist nur die Spaltgröße zu verändern. Wird beispielweise die vorteilhafterweise als Dämpfungsscheibe ausgebildete Dämpfungseinrichtung dünner ausgebildet, wird dadurch der Ventildurchfluss erhöht. Hierbei entstehen weder zusätzliche Fertigungskosten, noch verringert sich das Ventilvolumen.

Es ist auch von Vorteil, die Rückstellfeder im Innern eines als topfförmige Hülse ausgebildeten Ventilkolbens anzuordnen, um dadurch noch kleinere Einbaumaße für das erfindungsgemäße Ventil zu ermöglichen.

In einer vorteilhaften Ausbildung der Erfindung wird ein dem Magnetanker oder dem Ventilkolben zugeordneter gehäusefester Wegsensor vorgesehen, mit dem die Position des Ventilkolbens oder des Magnetankers ständig gemessen werden kann. Dies ermöglicht den Einsatz des erfindungsgemäßen Ventils auch mit Drosselfunktion.

Es ist besonders von Vorteil, wenn sich die Luftfeder in der oberen oder unteren gewünschten Position langsam positioniert. Ein Signal für die gedrosselte Stellung des Ventils kommt z. B. von einer elektronischen Steuerung, welche wiederum vom nun als Höhensensor wirkenden Wegsensor Informationen über die Fahrzeughöhe erhält. Man erhält damit erfindungsgemäß ein einfaches und preiswertes Proportionalventil.

Nach Bedarf kann man auch ein Ventil mit je einem Drucksensor oder Höhensensor bilden. Neben dem direkten Einbau eines 2/2-Wegeventils in eine Luftfeder ist es denkbar, mehrere 2/2-Wegeventile mit einem 3/2-Wegeventil in einem Ventilblock zusammenzufiihren.

In einer vorteilhaften Weiterbildung der Erfindung wird, um eine Durchflussregelung zu erreichen, vorgeschlagen, benachbart zum Magnetanker, jedoch außerhalb des Ankerraums einen Wegsensor (Hubsensor) anzuordnen und hiermit den Ankerhub, bzw. Ventilkolbenhub zu messen. Der Hubsensor wird vorteilhafterweise vom Ankerraum durch eine Wand aus Kunststoffmaterial abgetrennt angeordnet. Ein handelsüblicher Wegsensor, z. B. ein induktiver kontaktloser Sensor kann durch die Wand aus Kunststoffmaterial hindurch "sehen" und die Position der Ankerplatte des Magneten erkennen. Die Anordnung des Sensors außerhalb des Ankerraums (ist gleich außerhalb der Druckkammer) schützt diesen vor ungünstigen Druckeinwirkungen.

In einer anderen vorteilhaften Weiterbildung der Erfindung wird direkt in das Ventil ein Mikroprozessor integriert, anhand der Vorgaben einer elektronischen Steuerung die gewünschte Position des Magnetankers bzw. die Durchflussregelung der Druckluftmenge über das Ventil gesteuert. Die Information über die Drosselfunktion des Ventils wird vom Höhensensor geliefert.

In einer weiteren vorteilhaften Weiterbildung der Erfindung wird zur Betätigung des Ventilkolbens ein elektromagnetischer Antrieb vorgeschlagen. Hiermit lässt sich bei großen Balgzylindern bei einer großen Ventilkolbenbewegung eine große Durchflussmenge bei kleiner Leistung der elektrischen Spule erreichen. Gleichzeitig wird bei elektropneumatischem Antrieb einem Pilotventil wechselweise Druckluft aus dem Druckluftnetz oder dem Balgzylinder zur Verfügung gestellt.

Die Erfindung wird im Folgenden anhand eines Ausführungsbeispiels unter Bezugnahme auf die Zeichnung kurz beschrieben.
Fig. 1 zeigt einen Schnitt durch das Magnetventil in einer ersten Ausführungsform als 2/2-Wegeventil mit integriertem Wegsensor.
Fig. 2 zeigt einen Schaltplan eines 2/2-Wegeventils mit einem 3/2-Wegeventil, mit einem Wegsensor.
Fig. 3 zeigt einen Schnitt durch das Magnetventil in einer nicht erfindungsgemässen Ausführungsform als 3/2-Wegeventil.
Fig. 4 zeigt ein druckentlastetes 2/2-Wegeventil mit zwei Ausgängen in Verbindung mit einer festen Drossel.
Fig. 5 zeigt ein druckentlastetes Schaltventil mit elektropneumatischem Antrieb.

Gleich funktionierende Bauteile und Baugruppen sind in der folgenden Beschreibung der Einfachheit halber mit gleichen Bezugszeichen versehen.

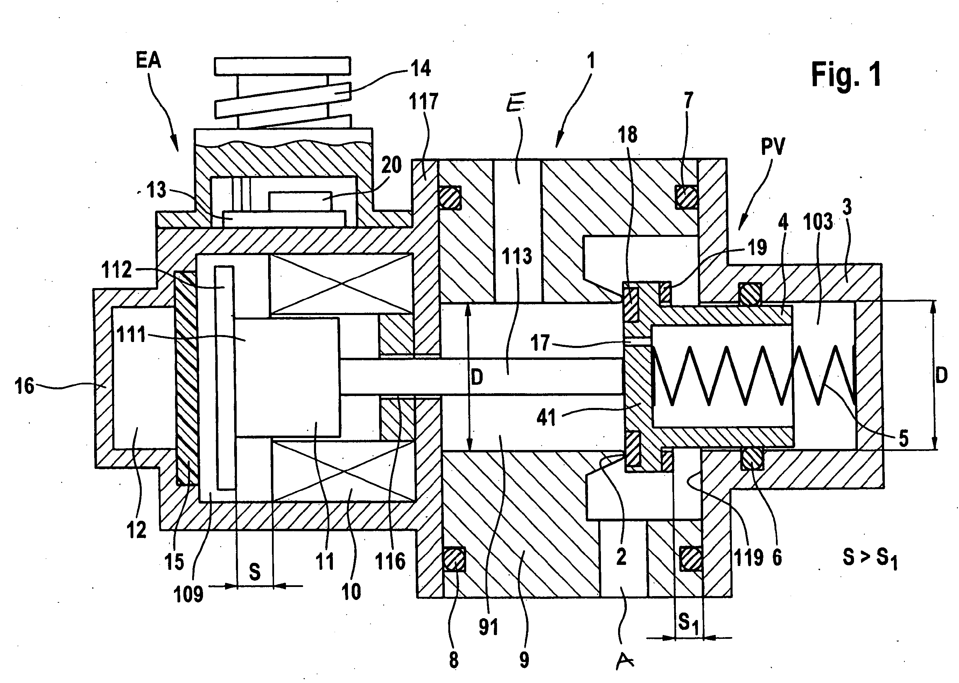

Fig. 1 zeigt beispielhaft ein druckentlastetes Schaltventil 1 mit einem Pneumatikventil PV und einem elektrischen Antrieb oder Elektroaktor EA, welche zusammenwirkend ausgebildet sind. Das Pneumatikventil hat ein Gehäuse 9 und zwei darin angeordnete Anschlüsse E und A sowie einen in dem Gehäuse 9 angeordneten längsbeweglichen Ventilkolben 4, welcher von einer sich an einem Ventildeckel 3 abstützenden Druckfeder 5 gegen einen im Gehäuse 9 angeordneten Ventilsitz 2 gedrückt wird, wobei eine im Ventilkolben 4 angeordnete Dichtung 18 einen Innenraum 91 des Gehäuses 8 gegen einen Innenraum 103 des Ventildeckels 3 abdichtet. Der im Ventildeckel 3 angeordnete längsbewegliche Ventilkolben 4 kann mit einer im Boden 41 des Ventildeckels 4 angeordneten Dämpfungsscheibe 19 gegen eine Ringfläche 119 des Ventildeckels 3 zur Anlage kommen. In diesem (hier nicht gezeigten) Zustand, ist der Durchfluss vom Eingang E zum Ausgang A geöffnet. Im Boden 41 ist ein Durchgangskanal 17 zum Druckausgleich zwischen dem Innenraum 91 und dem Innenraum 103 angeordnet. Über eine Ringdichtung 7 ist der Ventildeckel 3 gegenüber dem Gehäuse 9 abgedichtet. Über eine weitere Ringdichtung 8 ist das Gehäuse 9 gegenüber einer Wand 117 eines Gehäuses 16 abgedichtet. Durch die Wand 117 erstreckt sich eine Öffnung 116, durch welche ein Ankerstößel 113 eines Ankers 11, welcher sich im Ankerraum 109 des Elektroaktors EA befindet, hindurch erstreckt und mit dem Boden 41 des Ventilkolbens 4 im Kontakt steht. Der Ankerraum 109 ist gegenüber einem nicht weiter dargestellten, aber ortmäßig definierten Wegsensor 12 über eine Wand 15 aus Kunststoffmaterial abgetrennt. In Fig. 1 im linken oberen Bereich ist ein elektrischer Stecker 14 zu erkennen, über welchen Signale von einer nicht gezeigten Steuerung an eine ortsfest angeordnete Magnetspule 10 im Gehäuse 16 geleitet werden können.

Der Elektroaktor EA besteht in der Hauptsache aus einem Gehäuse 16, in dem die Magnetspule 10, der Anker 11 des Ventils und der Wegsensor 12 untergebracht sind. Im elektrischen Stecker 14 sind eine Leiterplatte 13, welche mit einem Mikroprozessor 20 zusammenarbeitet, angeordnet. Der Magnetanker 11 und die Magnetspule 10 sind durch die Wand 15 aus Kunststoff druckdicht vom Wegsensor 12 getrennt angeordnet. Elektrische Anschlüsse für den Magneten 10 und den Wegsensor 12 sind mit der Leiterplatte 13 verbunden. Über den elektrischen Stecker 14 erfolgt die Kommunikation der abgebildeten Vorrichtung mit einer nicht gezeigten Steuerung.

### Funktionsweise

Bei Anlegen von Druckluft am Eingang E strömt die Druckluft unter den Ventilkolben 4 und durch den Verbindungskanal 17 auf die zum Ventildeckel 3 zeigende Seite des Ventilkolbens 4. Da der Ventilsitz 2 im Gehäuse 9 den gleichen Durchmesser D hat, wie der Außendurchmesser des Ventilkolbens 4 auf der anderen Seite, entsteht automatisch ein Druckausgleich. Der Ventilkolben 4 wird nur durch die Kraft der Druckfeder 5 auf dem Ventilsitz 2 angedrückt. Nach außen wird der Ventilkolben 4 über eine im Ventildeckel 3 angeordnete Dichtung 6 abgedichtet. Wird an der Magnetspule 10 Strom angelegt, bewegt sich der Magnetanker 11 (in Fig. 1 nach rechts) gegen den Ventilkolben 4 gegen die Kraft der Druckfeder 5 und hebt den Ventilkolben 4 vom Ventilsitz 2 ab. Die Druckluft strömt jetzt vom Ventileingang E (Druckluftquelle) zum Ventilausgang A (Verbraucher). Der Magnetanker 11 bewegt den Ventilkolben 4 so lange, bis die Dämpfungsscheibe 19 auf der Ringfläche 119 des Ventildeckels 3 aufliegt. Der Ventilkolben bewegt sich in der hier abgebildeten Darstellung um den maximalen Ventilkolbenhub S1. Aufgrund der Tatsache, dass der Hub S des Magnetankers 11 größer ist, als der Hub S1 des Ventilkolbens 4, bleibt immer ein Spalt zwischen dem Magnetanker 11 und der Magnetspule 10, d. h. S kann nie Null werden. Mit anderen Wort, der Magnetanker 11 "klebt" nicht an der Magnetspule 10. Die Druckluft strömt so lange vom Eingang E bis zum Ausgang A, bis der Strom zur Magnetspule 10 fließt. Wird der Strom abgeschaltet, dann wird der Magnetanker 11 kraftlos und unter Wirkung der Druckfeder 5 über den Ventilkolben 4 in die hier dargestellte Ausgangsposition bewegt. Der Ventilkolben 4 liegt wieder auf dem Ventilsitz 2 und die Strömung der Druckluft vom Eingang E zum Ausgang A wird unterbrochen.

Da der Ringdurchmesser des Ventilsitzes 2 und der Außendurchmesser des Ventilkolbens 4 gleich groß sind, bleibt das Ventil 1 geschlossen. Um nun die Druckluft vom Verbraucher über das Ventil 1 zu entleeren, wird wiederum Strom an der Magnetspule 10 angelegt, und der Magnetanker 11 sowie der Ventilkolben 4 werden gegen die Druckfeder 5 bewegt und der Ventilkolben 4 wird vom Ventilsitz 2 abgehoben. In der Folge strömt die Druckluft vom Ausgang A des Ventils 1 zum Eingang E bzw. ins Freie. Die Druckluft vom Ausgang A (Verbraucher) strömt so lange über den Anschluss E, wie Strom an der Magnetspule 10 anliegt. Wird der Strom an der Magnetspule 10 abgeschaltet, wird der Magnetanker 11 wiederum kraftlos und die Druckfeder 5 drückt den Ventilkolben 4 wieder auf den Ventilsitz 2. Damit wird sofort der Druckluftstrom vom Anschluss A zum Anschluss E des Ventils 1 unterbrochen. Über den hinter der Wand 15 angeordneten Hubsensor 12 kann der Hub S des Magnetankers 11 ständig gemessen und mit Hilfe des Mikroprozessors 20 oder anderer nicht gezeigter Mittel ausgewertet und analysiert sowie für weitere Steuerungen verwendet werden.

Als Hubsensor 12 wird beispielsweise ein induktiver Sensor eingesetzt. Der Magnetanker 11 ist gegenüber der Stößelseite mit einer ferromagnetischen Rundscheibe 112 ausgeführt. Der Hubsensor 12, beispielsweise mit Analogausgang versehen, liefert ein Proportionalsignal, welches den Abstand von der zur Wand 15 zeigenden Stirnseite des Hubsensors 12 zur Ankerplatte 112 des Magnetankers 11 entspricht. Wird beispielsweise ein Signal vom Höhensensor eines Fahrzeugs, der den Abstand zwischen Fahrzeugachsen und dem Fahrzeugchassis misst, zum auf der Leiterplatte 13 angeordneten Mikroprozessor 20 geleitet, dann wird dieses Signal dort automatisch aufbereitet.

Wenn an dem Eingang E Druckluft ansteht und an der Magnetspule 10 Strom anliegt, bewegt sich der Magnetanker 11 in Richtung des Ventilkolbens 4 und hebt ihn über den Ankerstößel 113 gegen die Kraft der Druckfeder 5 vom Ventilsitz 2 ab. Der Hub S des Magnetankers wird ständig vom Hubsensor 12 gemessen und im zugeordneten Mikroprozessor 20 ausgewertet. Wenn nun ein Signal vom Höhensensor eines Fahrzeugs zum Mikroprozessor 20 gesendet wird, werden beide Signale im Mikroprozessor 20 verglichen und je nach Vorgabe bekommt der Ventilanker 11 von dem Mikroprozessor 20 ein Signal, um eine Strecke des Hubes S zurückzufahren. Damit verringert sich auch der Hub S1 des Ventilkolbens 4 und der Spalt zwischen dem Ventilkolben 4 und dem Ventilsitz 2 wird kleiner. Folglich wird die Druckluft vom Eingang P gedrosselt zum Verbraucher A (hier Luftfeder) strömen. Wenn die gewünschte Fahrzeugposition (Fahrzeughöhe) erreicht ist, wird das Signal über einen Höhensensor an den Mikroprozessor 20 weitergeleitet, und die Stromzufuhr zur Magnetspule 10 wird abgeschaltet. Damit wird der Magnetanker 11 wiederum kraftlos, und der Ventilkolben 4 wird aufgrund der Kraft der Druckfeder 5 wieder auf dem Ventilsitz 2 aufgesetzt. Eine weitere Druckluftzufuhr von der Druckquelle über den Eingang E zum Verbraucher (Ausgang A) wird unterbrochen. Die Anschlüsse E und A beim Pneumatikventil PV können auch vertauscht werden. Mit anderen Worten kann man auch die Druckluftquelle am Anschluss A und den Verbraucher am Anschluss E anschließen. Das Schaltventil 1 in der in Fig. 1 gezeigten einfachen Ausführungsform besteht aus dem Pneumatikventil PV und dem Elektroaktor EA mit Magnetspule 10, Magnetanker 11, Gehäuse 16 und elektrischem Stecker 14. Es funktioniert als Schaltventil mit AUF- und ZU-Funktion.

Wie oben bereits erläutert wurde ist bei der erfindungsgemäßen Konstruktion des Ventils der Ventilkolben mit einer "raumtrennenden" Dichtung versehen. Damit sind zwei Anschlussräume (zur Druckluftquelle bzw. an die Umgebung und zum Verbraucher) voneinander dadurch abgeteilt, dass der Durchmesser D des dem Ventilgehäuse 9 zugeordneten Ventilsitzes 2, der Durchmesser D der Dichtung 18 des Ventilkolbens 4 und der Durchmesser D des Ventilkolbens 4 gleich sind. Die Anschlussräume, die auf der einen Seite mit der Druckluftquelle bzw. der Umgebung und auf der anderen Seite mit dem Verbraucher verbunden sind, sind mittels der Dichtung 18 des Ventilkolbens 4 voneinander getrennt.

Es ist besonders vorteilhaft, den Ventilkolben 4 einstückig mit aufvulkanisierter Dichtung 18 und Dämpfungseinrichtung 19 auszuführen, um Geräusche bei der Ventilöffnung zu reduzieren. Durch die Größe des Spalts S 1 zwischen der Dämpfungseinrichtung 19 des Ventilkolbens und der Ringfläche 119 des Ventildeckels 3 wird der maximale Ventilhub S1 bzw. die maximale Ventilöffnung bestimmt. Um den maximales Ventildurchfluss zu verändern ist nur die Spaltgröße S1 zu verändern. Wird beispielweise die vorteilhafterweise als Dämpfungsscheibe ausgebildete Dämpfungseinrichtung 19 dünner ausgebildet, wird dadurch der Ventildurchfluss erhöht. Es ist auch von Vorteil, die Rückstellfeder 5 im Innern eines als topfförmige Hülse ausgebildeten Ventilkolbens anzuordnen, um dadurch noch kleinere Einbaumaße für das erfindungsgemäße Ventil zu ermöglichen.

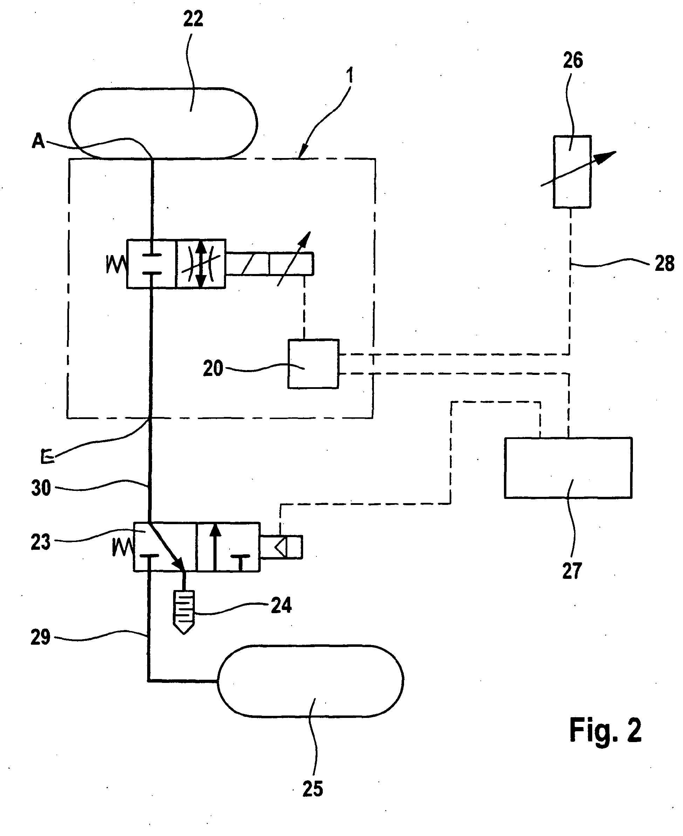

In Fig. 2 ist ein Schaltplan gezeigt, mit dem die Funktion des Schaltventils 1 in Verbindung mit einem Hauptventil 23, einem Höhensensor 26 und einer Elektronik 27 erläutert werden soll, wobei der Einsatz in Luftfederungsanlagen, z. B. von Fahrzeugen diskutiert wird. Beim Einschalten des Hauptventils 23 strömt Druckluft aus dem Druckluftspeicher 25 über Druckluftleitungen 29 und 30 bis zum Eingang E des Schaltventils 1. Kommt nun von der Elektronik 27 ein Signal an den Mikroprozessor 20, wird das Schaltventil 1 mit vollem Querschnitt geöffnet. Der Magnetanker 11 schiebt den Ventilkolben 4 gegen die Druckfeder 5 in die Endlage. Der Mikroprozessor 20 erhält ständig Informationen vom Höhensensor 26 darüber, in welcher Höhe sich das Fahrzeugchassis befindet. Der Hub des Ventilkolbens 4 wird ständig vom Wegsensor 12 gemessen und ein entsprechendes Analogsignal an den Mikroprozessor 20 weitergeleitet. Gleichzeitig bekommt der Mikroprozessor 20 ein Analogsignal vom Höhensensor 26. Wenn nun eine bestimmte Fahrzeughöhe erreicht ist (jedoch noch keine Endposition, welche in der Elektronik 27 gespeichert ist), wird über den Mikroprozessor 20 ein Signal an die Magnetspule 10 weitergeleitet und der Magnetanker 11 fährt um eine Wegstrecke den Hub S1 zurück. Damit wird automatisch die Druckluftzufuhr vom Druckluftspeicher 25 zur Luftfeder 22 gedrosselt. Wenn die Endhöhenposition des Fahrzeugs erreicht ist, wird über den Höhensensor 26 diese Position zum Mikroprozessor 20 weitergeleitet, welcher wiederum ein Signal weiterleitet, das automatisch die Stromzufuhr zur Magnetspule 10 und zum Hauptventil 23 unterbricht. Das Schaltventil 1 und das Hauptventil 23 befinden sich beide in Grundstellung geschlossen ("stromlos geschlossen"). Die Druckluftleitung 30 wird automatisch über das Hauptventil 23 und einen Schalldämpfer 24 entleert.

Soll nun das Fahrzeug abgesenkt werden, wird zuerst das Schaltventil 1 auf vollen Querschnitt geschaltet. Der Magnetanker 11 fährt um den vollen Hub S gegen den Ventilkolben 4a und die Druckfeder 5. Wenn jetzt vom Höhensensor 26 ein Signal geliefert wird, welches angibt, dass das Schaltventil die gedrosselte Stellung eingenommen hat, dann wird ein Signal vom Mikroprozessor 20 an die Magnetspule 10 weitergegeben und der Magnetanker 11 fährt um eine Strecke des Hubes S zurück. Der Druckluftaustritt aus der Luftfeder 22 wird gedrosselt. Bei Erreichen der gewünschten neuen Fahrzeugposition, die über den Höhensensor 26 an den Mikroprozessor 20 gemeldet wird, wird die Stromzufuhr zur Spule 10 unterbrochen und das Schaltventil 1 befindet sich in der Grundstellung geschlossen.

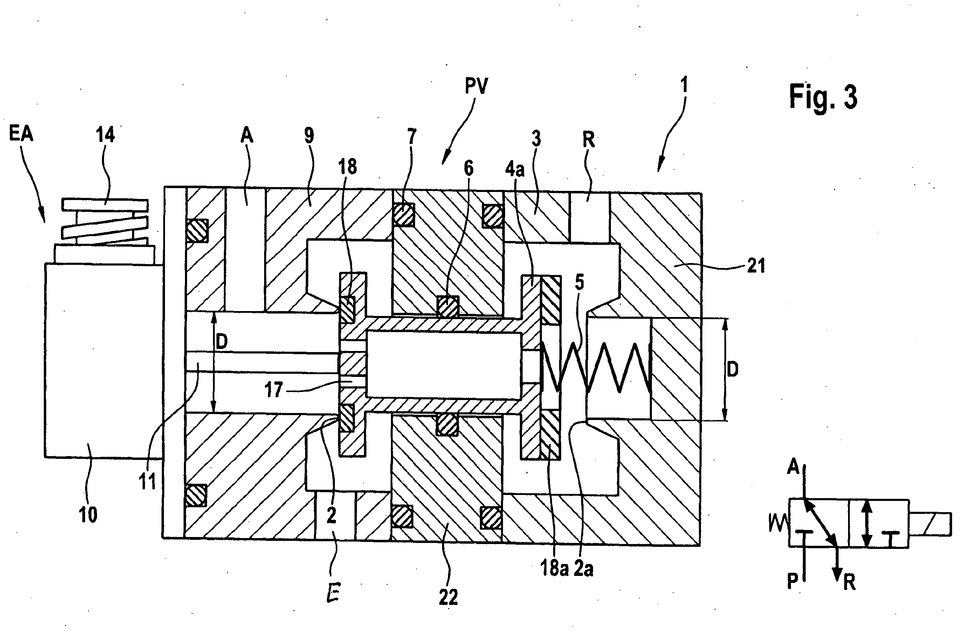

In Fig. 3 ist ein Schaltventil 1 in einer nicht erfindungsgemässen 3/2-Wege-Ausfürung dargestellt. Der Elektroaktor EA besteht nur aus einer Magnetspule 10, einem Magnetanker 11 und einem elektrischen Stecker 14. Das Pneumatikventil PV wird hier mit einem Doppelzylinderventilkolben 4a ausgeführt. Im Anschluss E liegt Druckluft an. Der Anschluss A (Verbraucher) ist über den Ventilkolben 4a mit einem Anschluss R mit der Atmosphäre verbunden. Dadurch, dass der Durchmesser D des Ventilsitzes 2 und der Außendurchmesser D des Ventilkolbens 4a gleich groß sind, ist der Ventilkolben 4a druckentlastet und wird durch die Druckfeder 5 an den Ventilsitz 2 gedrückt. Die beiden Anschlüsse A und R sind durch Verbindungskanäle 17 in dem Ventilkolben 4a verbunden. Wird über den elektrischen Stecker 14 an den Elektroaktor EA Strom angelegt, bewegt sich der Magnetanker 11 gegen den Ventilkolben 4a und die Druckfeder 5. Dadurch wird der Durchgang vom Eingang E zum Ausgang A frei, und gleichzeitig legt sich die Ventilkolbendichtung 18a auf den Ventilsitz 2a. Hiermit wird die Verbindung zwischen dem Ausgang A und der Entlüftung R unterbrochen. Die Verbindung zwischen dem Eingang P und dem Ausgang A bleibt so lange erhalten, wie die Stromzufuhr vom Elektroaktor EA nicht unterbrochen wird. Bei Stromunterbrechung zum Elektroaktor EA wird der Magnetanker 11 kraftlos und die Druckfeder 5 drückt den Ventilkolben 4a auf den Ventilsitz 2. Damit wird die Druckluftverbindung vom Eingang E zum Ausgang A unterbunden und die Verbindung zwischen Ausgang A und Entlüftung R wieder hergestellt. Die Druckluft vom Verbraucher (Anschluss A) strömt über den Anschluss R ins Freie an die Umgebung ab.

Auch bei diesem Ausführungsbeispiel des erfindungsgemäßen Ventils ist ein Elektroaktor EA mit integriertem Wegsensor 12 und einer Leiterplatte 13 mit Mikroprozessor 20 einsetzbar und damit ebenso eine gedrosselte Funktion beim Schaltventil 1 erreichbar.

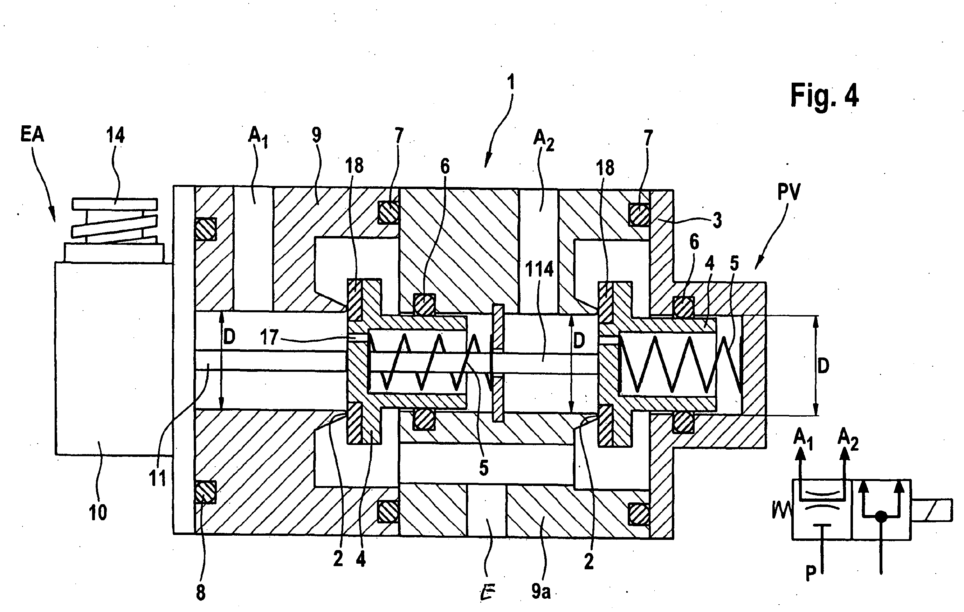

Fig. 4 zeigt wiederum ein Schaltventil 1 mit zwei Ausgängen und einer Drosselverbindung. Diese Ventilausführung wird sehr oft bei luftgefederten Fahrzeugen für die Vorderachse eingesetzt. Der Haupteingang befindet sich am Anschluss E, die beiden Ausgänge befinden sich an den Stellen A1 und A2. Die Drosselverbindung zwischen den beiden Ausgängen A1 und A2 erfolgt über den Verbindungskanal 17. Wenn die Druckluft am Haupteingang E ansteht, bleiben beide Ventilkolben 4 in Grundstellung. Wird über den elektrischen Stecker 14 an der Magnetspule 10 Strom angelegt, bewegt sich der Magnetanker 11 gegen den ersten Ventilkolben 4 und seine Druckfeder 5, und über den die beiden Ventilkolben 4 verbindenden Ankerstößel 114 bewegt sich ebenso ein zweiter (in der Darstellung nach Fig. 4 rechter) Ventilkolben 4 von dem rechten Ventilsitz 2. Hierauf beginnt die Druckluft vom Hauptanschluss E zu den Ausgängen A1 und A2 zu strömen.

Wird nun der Strom zur Magnetspule 10 unterbrochen, wird der Magnetanker 11 wieder kraftlos und die beiden Ventilkolben werden von Ihren beiden Federn 5 wieder auf die Ventilsitze 2 zurückgedrückt. Eine Verbindung zwischen den beiden Ausgängen A1 und A2 bleibt über den Verbindungskanal 17 bestehen. Um die Druckluft vom Verbraucher, d. h. den Anschlüssen A1 und A2 zu entleeren, muss zunächst der Hauptanschluss P drucklos geschaltet sein.

Beim Anlegen von Strom an der Magnetspule 10 über den elektrischen Stecker 14 bewegt sich der Magnetanker 11 zuerst gegen den linken Ventilkolben 4 und seine Druckfeder 5, danach wird dann auch der zweite Ventilkolben 4 und seine Druckfeder 5 vom Magnetanker 11 bewegt, sodass zuletzt die Druckluft vom Verbraucher (Anschlüsse A1 und A2) über den Hauptanschluss P entleert wird. Bei Stromunterbrechung an der Magnetspule 10 wird der Magnetanker 11 kraftlos, und die beiden Druckfedern 5 drücken die beiden Ventilkolben 4 auf die Ventilsitze 2 zurück.

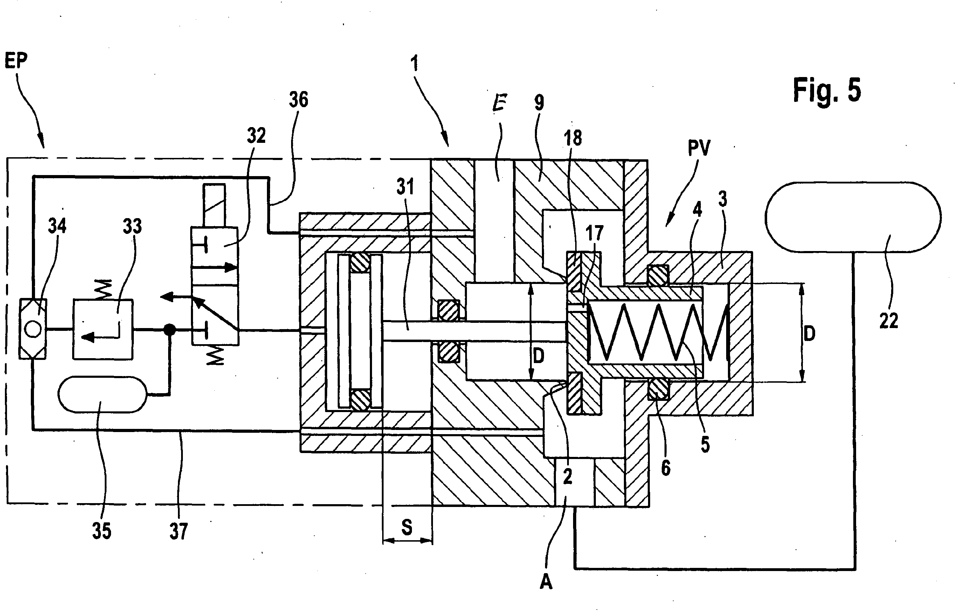

In Fig. 5 ist ein druckentlastetes Schaltventil 1 mit elektropneumatischem Antrieb EP dargestellt, der sich im Wesentlichen aus dem Pneumatikventil PV und einem eletropneumatischen Antrieb EP zusammensetzt. Hauptteile des elektropneumatischen Antriebs EP sind ein Kolben 31, ein Pilotventil 32, ein Druckregler 33, ein Wechselventil 34 und ein Druckluftspeicher 35, deren Anordnung aus Fig. 5 ohne Mühe entnehmbar ist.

Die Druckluftversorgung für das Pilotventil 32 findet wechselweise aus dem Druckluftnetz über E über die Druckluftleitung 36 und aus dem Balgzylinder 22 über die Druckluftleitung 37 statt. Die Druckluft wird über ein Doppelrückschlagventil 34 und einen Druckregler 33 zum Pilotventil 32 geführt. Bei Einschalten des Pilotventils 32 wird die Druckluft aus dem Druckluftspeicher 35 zum Kolben 31 geleitet, und der Kolben 31 bewegt sich in Richtung des Ventilkolbens 4 im Pneumatikventil PV. Durch Bewegung des Kolbens 31 wird der Ventilkolben 4 vom Ventilsitz 2 abgehoben. Dadurch entsteht eine freie Verbindung zwischen dem Eingang E und dem Ausgang A des druckentlasteten Schaltventils 1. Steht beispielsweise am Eingang E Druckluft an, wird automatisch die Luftfeder 22 mit Druckluft befüllt. Der Füllvorgang dauert so lange an, wie das Pilotventil 32 geöffnet ist und die Druckfeder 5 den Ventilkolben 4 auf den Ventilsitz 2 drückt und gleichzeitig der Kolben 31 in seine Ausgangsposition geschoben wird. Ist der Eingang P mit der Atmosphäre verbunden und der Ventilkolben 4 aufgrund des eingeschalteten Pilotventils 32 und des Kolbens 31 vom Ventilsitz 2 abgehoben, strömt Druckluft aus der Luftfeder 22 über den Anschluss P ins Freie.

In Fig. 5 ist das druckentlastete Schaltventil 1 zum Steuern der Luftfeder 22 dargestellt. Es ist jedoch selbstverständlich, dass jeder andere Antrieb bzw. Druckluftverbraucher mit dem druckentlasteten Schaltventil gesteuert werden kann.

### BEZUGSZEICHEN

- 1: Schaltventil
- 2, 2a: Ventilsitz
- 3: Ventildeckel
- 4, 4a: Ventilkolben
- 5: Druckfeder
- 6: Dichtung
- 9: Gehäuse
- 10: ortsfeste Magnetspule
- 11: längsbeweglicher Anker
- 12: Wegsensor
- 13: Leiterplatte
- 14: Stecker
- 15: Wand aus Kunststoffmaterial
- 16: Gehäuse
- 17: Verbindungskanal
- 18: Dichtung
- 18a: Dichtung
- 19: Dämpfungsscheibe
- 20: Mikroprozessor
- 22: Luftfeder
- 23: Hauptventil
- 24: Schalldämpfer
- 25: Druckluftspeicher
- 26: Höhensensor
- 27: Elektronik
- 29: Druckluftleitung
- 30: Druckluftleitung
- 31: Kolben
- 32: Pilotventil
- 33: Druckregler
- 34: Wechselventil
- 35: Druckluftspeicher
- 36: Druckluftleitung
- 41: Boden
- 91: Innenraum des Gehäuses 9
- 103: Innenraum des Ventildeckels 3
- 109: Ankerraum
- 111: Kopfende
- 112: Ankerplatte
- 113: Ankerstößel
- 114: Ankerstößel
- 119: Ringfläche
- A: Anschluss
- A1: Ausgang
- A2: Ausgang
- D: Durchmesser
- E: Eingang
- EA: elektrischer Antrieb oder Elektroaktor
- EP: elektropneumatischer Antrieb
- P: Anschluss
- PV: Pneumatikventil
- S: Ankerhub
- S1: Ventilkolbenhub

## Patentansprüche

1. Druckentlastetes Schaltventil (1) für eine Luftfederungsanlage, mit einem Abschnitt Pneumatikventil (PV) und mit einem Abschnitt Elektrischer Antrieb (EA), wobei der Abschnitt Pneumatikventil (PV) einen längsbeweglichen Ventilkolben (4) aufweist und der Abschnitt Elektrischer Antrieb (EA) mindestens eine im Schaltventil (1) ortsfeste Magnetspule (10) und einen längsbeweglichen Anker (11) aufweist, welcher mit dem längsbeweglichen Ventilkolben (4) des Abschnitts Pneumatikventil (PV) zusammenarbeitet, jedoch keine feste Verbindung mit diesem aufweist, und wobei der Ventilkolben (4) von einer Feder (5) gegen einen Ventilsitz (2) gedrückt wird, **dadurch gekennzeichnet, dass** das Schaltventil (1) als 2/2-Wegeventil ausgebildet ist, wobei der Ventilkolben (4) in seiner Ausgangsposition auf dem Ventilsitz (2), in welcher ein Druckluftstrom von einem Eingang (E) zu einem Ausgang (A) oder vom Ausgang (A) zum Eingang (E) unterbrochen ist, beim Anlegen von Druckluft am Eingang (E) oder am Ausgang (A) druckentlastet ist und mittels des Elektrischen Antriebs (EA) gegen die Kraft der Feder (5) vom Ventilsitz (2) abhebbar ist, wodurch ein Druckluftstrom vom Eingang (E) zum Ausgang (A) oder vom Ausgang (A) zum Eingang (E) erfolgt, und wobei der Eingang (E) mit einer Druckluftquelle (25) verbunden ist und der Ausgang (A) mit einer Luftfeder (22) verbunden ist.

2. Druckentlastetes Schaltventil nach Anspruch 1,
**dadurch gekennzeichnet,**
**dass** der Ventilkolben (4) eine Dichtung (18) und der Ventilsitz (2) den gleichen Durchmesser (D) haben.

3. Druckentlastetes Schaltventil nach Anspruch 1 oder 2,
**dadurch gekennzeichnet,**
**dass** ein Hub (S) des Ankers (11) größer ist als ein Hub (S1) des Ventilkolbens (4).

4. Druckentlastetes Schaltventil nach einem der Ansprüche 1 bis 3,
**dadurch gekennzeichnet,**
**dass** ein Wegsensor (12) vorgesehen ist, welcher durch eine Wand (15) aus Kunststoffmaterial vom Ankerraum (109) getrennt ist, und welcher geeignet ist, den Ankerhub (S) des Ankers (11) zu messen.

5. Druckentlastetes Schaltventil nach Anspruch 4,
**dadurch gekennzeichnet,**
**dass** der Wegsensor (12) als induktiver Sensor ausgebildet ist.

6. Druckentlastetes Schaltventil nach einem der Ansprüche 1 bis 5,
**dadurch gekennzeichnet,**
**dass** es Mittel (20, 26, 27) zum Aktivieren des Schaltventils (1) aufweist, wobei die Mittel (20, 26, 27) wenigstens einer Luftfeder (22) einer Achse eines Fahrzeugs zugeordnet sind, mit einem Höhensensor (26) und einem Mikroprozessor (20), wobei der Mikroprozessor (20) in Verbindung mit dem Wegsensor (12) Logikbausteine aufweist, wobei die Elemente so miteinander verknüpft sind, dass vom Höhensensor (26) ausgehende Signale nur dann zu einer neuen Position entlang des Ankerhubs (S) des Magnetankers (11) bzw. Ventilkolbens (4) den Ventilkolbenhub (S1) steuernde Signale abgeben, wenn der Höhen-Ist-Wert von dem in der Steuerung (27) gewählten Höhen-Soll-Wert um eine vorbestimmte Differenz abweicht.

## Claims

1. A pressure-relieved switching valve (1) for an air suspension system including a pneumatic valve (PV) portion and an electrical drive (EA) portion, wherein the pneumatic valve (PV) portion has a longitudinally movable valve piston (4) and the electrical drive (EA) portion has at least one solenoid (10) stationary in the switching valve (1) and a longitudinally movable armature (11), which cooperates with the longitudinally movable valve piston (4) of the pneumatic valve (PV) portion, but does not have a fixed connection to it, and wherein the valve piston (4) is pressed against a valve seat (2) by a spring (5), **characterized in that** the switching valve (1) is formed as a 2/2 way valve, wherein the valve piston (4) is pressure-relieved in its starting position on the valve seat (2), in which a pressurized airflow from an inlet (E) to an outlet (A) or from the outlet (A) to the inlet (E) is interrupted, upon applying pressurized air on the inlet (E) or on the outlet (A), and can be lifted off the valve seat (2) by means of the electrical drive (EA) against the force of the spring (5), whereby a pressurized airflow is effected from the inlet (E) to the outlet (A) or from the outlet (A) to the inlet (E), and wherein the inlet (E) is connected to a pressurized air source (25) and the outlet (A) is connected to an air spring (22).

2. The pressure-relieved switching valve according to claim 1,
**characterized in that**
the valve piston (4), a seal (18) and the valve seat (2) have the same diameter (D).

3. The pressure-relieved switching valve according to claim 1 or 2,
**characterized in that**
a stroke (S) of the armature (11) is larger than a stroke (S1) of the valve piston (4).

4. The pressure-relieved switching valve according to any one of claims 1 to 3,
**characterized in that**
a path sensor (12) is provided, which is separated from the armature compartment (109) by a wall (15) of plastic material, and which is suitable for measuring the armature stroke (S) of the armature (11).

5. The pressure-relieved switching valve according to claim 4,
**characterized in that**
the path sensor (12) is formed as an inductive sensor.

6. The pressure-relieved switching valve according to any one of claims 1 to 5,
**characterized in that**
it has means (20, 26, 27) for activating the switching valve (1), wherein the means (20, 26, 27) are associated with at least one air spring (22) of an axle of a vehicle, including a height sensor (26) and a microprocessor (20), wherein the microprocessor (20) has logic modules in communication with the path sensor (12), wherein the elements are linked to each other such that signals emanating from the height sensor (26) only output signals controlling the valve piston stroke (S1) to a new position along the armature stroke (S) of the magnet armature (11) or valve piston (4), if the height actual value deviates by a predetermined difference from the height desired value selected in the control (27).

## Revendications

1. Vanne de commande (1) équilibrée pour un système de suspension pneumatique, comprenant une partie vanne pneumatique (PV) et comprenant une partie commande électrique (EA), la partie vanne pneumatique (PV) présentant un piston de vanne (4) déplaçable dans le sens longitudinal et la partie commande électrique (EA) présentant au moins une bobine d'électroaimant (10) stationnaire dans la vanne de commande (1) et un induit (11) déplaçable dans le sens longitudinal, lequel coopère avec le piston de vanne (4), déplaçable dans le sens longitudinal, de la partie vanne pneumatique (PV) mais ne présente pas de liaison fixe avec celui-ci, et le piston de vanne (4) étant pressé par un ressort (5) contre un siège de vanne (2), **caractérisée en ce que** la vanne de commande (1) est réalisée en tant que vanne à 2/2 voies, le piston de vanne (4), dans sa position initiale sur le siège de vanne (2), dans laquelle un courant d'air comprimé allant d'une entrée (E) vers une sortie (A) ou de la sortie (A) vers l'entrée (E) est interrompu, étant détendu en pression lorsque de l'air comprimé est appliqué à l'entrée (E) ou à la sortie (A) et pouvant être soulevé du siège de vanne (2) contre la force du ressort (5) au moyen de la commande électrique (EA), sur quoi un courant d'air comprimé a lieu de l'entrée (E) vers la sortie (A) ou de la sortie (A) vers l'entrée (E), et l'entrée (E) étant reliée à une source d'air comprimé (25) et la sortie (A) étant reliée à un coussin d'air (22).

2. Vanne de commande équilibrée selon la revendication 1,
**caractérisée en ce**
**que** le piston de vanne (4), une bague d'étanchéité (18) et le siège de vanne (2) ont le même diamètre (D).

3. Vanne de commande équilibrée selon la revendication 1 ou 2,
**caractérisée en ce**
**qu'**une course (S) de l'induit (11) est plus grande qu'une course (S1) du piston de vanne (4).

4. Vanne de commande équilibrée selon l'une quelconque des revendications 1 à 3,
**caractérisée en ce**
**qu'**un capteur de trajet (12) est ménagé, lequel est séparé de la chambre d'induit (109) par une paroi (15) en matière plastique, et lequel est apte à mesurer la course d'induit (S) de l'induit (11).

5. Vanne de commande équilibrée selon la revendication 4,
**caractérisée en ce**
**que** le capteur de trajet (12) est réalisé en tant que capteur inductif.

6. Vanne de commande équilibrée selon l'une quelconque des revendications 1 à 5,
**caractérisée en ce**
**qu'**elle présente des moyens (20, 26, 27) pour activer la vanne de commande (1), les moyens (20, 26, 27) étant attribués à au moins un coussin d'air (22) d'un axe d'un véhicule, comprenant un capteur de hauteur (26) et un microprocesseur (20), le microprocesseur (20) présentant des éléments logiques en relation avec le capteur de trajet (12), les éléments étant reliés entre eux de manière à ce que des signaux partant du capteur de hauteur (26) ne délivrent des signaux commandant la course (S1) du piston de vanne (4) pour une nouvelle position le long de la course d'induit (S) de l'armature d'aimant (11) resp. du piston de vanne (4) que lorsque la valeur réelle de la hauteur diffère de la valeur théorique de la hauteur sélectionnée dans la commande (27) d'une différence prédéterminée.
